# EUROPÄISCHE PATENTANMELDUNG

(11) **EP 1 215 460 A2**
(43) Veröffentlichungstag der Anmeldung: **19.06.2002**
(21) Anmeldenummer: 01129568.0
(22) Anmeldetag: 12.12.2001
(51) Int. Cl.: F28D 21/00, F28D 7/08, E03F 3/04

(54) **Vorrichtung zum Entsorgen von Abwasser**

(30) Priorität: 14.12.2000 DE 10062337
(71) Anmelder: Zimpel, Detlef Joachim, 39120 Magdeburg (DE)
(72) Erfinder: Zimpel, Detlef Joachim, 39120 Magdeburg (DE); Sauerbier, Ottomar, 39326 Gross Ammensleben (DE)
(74) Vertreter: Neuhäuser, Uwe

(57) **Zusammenfassung**

Die Aufgabe, eine Vorrichtung anzugeben, welche eine annähernd kontinuierliche sowie kostengünstige und effektive Rückgewinnung von Wärmeenergie aus Abwasser gewährleistet, wird im Wesentlichen derart gelöst, dass einem Grundleitungsrohr (1), insbesondere abwasserführenden Grundleitungsrohr (1), ein oder mehrere Wärmetauscher (4) zugeordnet sind.

## Beschreibung

Die Erfindung betrifft eine Vorrichtung zum Entsorgen von Abwasser aus privaten Haushalten, öffentlichen Einrichtungen und Gewerbebetrieben in Form eines Grundleitungsrohres, insbesondere abwasserführenden Grundleitungsrohres, bestehend aus Werkstoffen, wie Beton, Steinzeug, Kunststoff, Glas, Metall oder Verbundwerkstoffen.

In Wohn- und Gewerbegebieten fällt bekanntermaßen Abwasser mit relativ hoher Wassertemperatur an und wird im Regelfall direkt in die Kanalisation geleitet.
Diese Maßnahme führt zum Temperaturanstieg der Flussläufe, woraus wiederum ein erhöhter Verdunstungsgrad des Wassers resultiert.
Im Ergebnis wird der "Treibhauseffekt" weiter begünstigt, mit den darauf zurückzuführenden witterungsbedingten Katastrophen, wie übernormale Regenfälle, daraus resultierende Überschwemmungen, Stürme etc.
Die im Abwasser gespeicherte Wärmeenergie bleibt somit im überwiegenden Fall ungenutzt.
Infolge des ständig wachsenden Wärmebedarfes werden insbesondere fossile Brennstoffreserven unnötig schnell verbraucht. Ferner ist ein ständig steigender Aufwand bei der Erzeugung von Wärme, und vor allen Dingen bei der Beschaffung der fossilen Brennstoffe (Erdöl; Erdgas) zu verzeichnen.
Schlußendlich bleibt es dem Energieerzeuger nicht erspart, die entstehenden Mehrkosten an die Endverbraucher weiterzuleiten.

Um diesem allgemein bekannten Mißstand zu begegnen, sind Verfahren und Vorrichtungen offenbart worden, die im Wesentlichen vorsehen, Wärmeenergie aus Abwasser im unmittelbaren Bereich der Entstehung zu nutzen.
Hierzu finden im Wesentlichen an sich bekannte Wärmetauscher und Wärmepumpen Anwendung.

Aus den Druckschriften DE 197 23 148 A und DE 198 17 031 A sind beispielsweise Wärmetauscher bekannt, die unterhalb eines Duschbeckens angeordnet sind und durch welche im Gegenstromverfahren warmes Ab- und kaltes Frischwasser aneinander vorbeigeführt wird.

Ferner ist aus der DE 199 06 999 A eine Vorrichtung zur Abwasserwärmerückgewinnung bekannt, wobei vorgeschlagen wird, warmes Abwasser in einem Sammelbehälter zu sammeln und mittels Wärmetauscherelementen und einer Wärmepumpe Wärmeenergie aus dem Abwasser zu entnehmen.

Sicherlich sind vorstehende Verfahren und Vorrichtungen geeignet Wärmeenergie aus warmen Abwasser zu entnehmen und entsprechend nutzbar zu machen.
Als nachteilig ist jedoch herauszustellen, dass diese Lösungen entweder direkt beim Verbraucher an dem jeweiligen Wärmeerzeuger zugeordneten Abwasserablauf ansetzen, woraus eine Vielzahl von entsprechenden angepaßten Vorrichtungen, die mit entsprechenden Kosten einhergehen, resultieren oder zum anderen im Falle von Abwassersammelbehältern das Problem der Fäkalien Berücksichtigung finden muß und demgemäß ebenfalls erhebliche Kosten für die Wärmerückgewinnung zu erwarten sind.

Hier setzt die nachfolgend beschriebene Erfindung an.

Aufgabe der Erfindung ist es demgemäß, die Nachteile des eingangs geschilderten Standes der Technik zu vermeiden und eine Vorrichtung anzugeben, welche eine annähernd kontinuierliche sowie kostengünstige und effektive Rückgewinnung von Wärmeenergie aus Abwasser gewährleistet, denn bisher unbekannt geblieben sind nähere Vorstellungen und Maßnahmen, die Wärmeenergie gerade in den Bereichen der Abwasserentsorgung zurückzugewinnen, in denen ein annähernd kontinuierlicher Warmwasseranfall zu verzeichnen ist.

Erfindungsgemäß wird die Aufgabe in Verbindung mit den Merkmalen im Oberbegriff des Anspruchs 1 derart gelöst, dass einem Grundleitungsrohr, insbesondere abwasserführenden Grundleitungsrohr, ein oder mehrere Wärmetauscher zugeordnet sind.

Gerade im Bereich der abwasserführenden Grundleitungsrohre, d. h., vor dem Einlauf in die Kanalisation, ist ein annähernd kontinuierlicher Anfall von warmem Abwasser zu verzeichnen, da in der Regel hier eine Mehrzahl von Verbrauchern, beispielsweise Haushalten, angeschlossen ist und die Verweildauer des warmen Abwassers in diesen Grundleitungsrohren als ausreichend eingeschätzt wird, um genügend Wärmeenergie demselben zu entnehmen.

In einer Ausgestaltung der Erfindung sind die Wärmetauscher in ein mit einem Wärmeübertragungsmedium gefülltes Kreislaufsystem einer an sich bekannten Wärmepumpe eingebunden.

Eine weitere Ausgestaltung der Erfindung sieht vor, dass die Wärmetauscher langgestreckt oder plattenförmig ausgebildet sind, wobei Wärmetauscher in Form von langgestreckten Gebilden ein oder mehrfach gekrümmt sowie Rohre oder rohrähnlich ausgebildet sein können.
Wärmetauscher in Form von plattenförmigen Gebilden können gekrümmte und an die Kontur des Grundleitungsrohres angepaßte Hohlkörper sein.

In erfinderischer Fortbildung weist das Wärmeübertragungsmedium einen flüssigen oder gasförmigen Aggregatzustand auf.
Dabei ist es angezeigt, dass das flüssige Wärmeübertragungsmedium zur Gewährleistung einer Frostsicherheit aus Glykol oder Alkohol oder einer Mischung derselben mit Wasser besteht.

Ferner wird vorgeschlagen, dass die Wärmetauscher aus einem wärmeleitenden Werkstoff bestehen, welches Kupfer, Aluminium, Stahlblech, gegebenenfalls rostfreien Stahlblech, Glas oder Kunststoff sein kann.

Eine zweckmäßige Weiterbildung sieht vor, die Wärmetauscher auf der Innenund/oder der Außenkontur des Grundleitungsrohres fest, gegebenenfalls lösbar, anzuordnen.

Eine andere Weiterbildung sieht vor, dass die Wärmetauscher in die Wandung des Grundleitungsrohres eingelassen oder in die Wandung des Grundleitungsrohr integriert, vorzugsweise eingegossen sind.

In einer weiteren vorteilhaften Ausgestaltung der Erfindung ist vorgesehen, dass die Wärmetauscher in einem direkten oder indirekten Kontakt mit dem Abwasser stehen. Fernerhin wird vorgeschlagen, dass die Wärmetauscher jeweils wenigstens einen Vor- und einen Rücklauf für das Wärmeübertragungsmedium aufweisen, wobei jeder Wärmetauscher getrennt von gegebenenfalls weiteren Wärmetauschern über Vor- und Rücklauf mit der Wärmepumpe verbunden sein kann.

Es kann aber auch angezeigt sein, Vor- und Rücklauf von wenigstens zwei Wärmetauschern eines Grundleitungsrohres zur Ausbildung eines gemeinsamen Kreislaufsystems mit der Wärmepumpe zu verbinden.

Auch können Vor- und Rücklauf der Wärmetauscher von wenigstens zwei zusammenfügbaren Grundleitungsrohren zur Ausbildung eines gemeinsamen Kreislaufsystems mit der Wärmepumpe außerhalb der Wandung der Grundleitungsrohre zusammensteck- oder -schraubbar ausgeführt sein.

Ebenso können Vor- und Rücklauf der Wärmetauscher von wenigstens zwei zusammenfügbaren Grundleitungsrohren zur Ausbildung eines gemeinsamen Kreislaufsystems mit der Wärmepumpe in die Wandung der Grundleitungsrohre, vorzugsweise in den Stirnflächenbereich derselben, eingelassen und zusammensteckbar ausgeführt sein

Schließlich sieht die Erfindung noch vor, dass die Wärmetauscher vorzugsweise im und/oder unterhalb des Flüssigkeitsspiegels des Abwassers im Grundleitungsrohr an der Innen- und/oder der Außenkontur und/oder in der Wandung desselben angeordnet sind.

Die vorgeschlagene Vorrichtung in Form des abwasserführenden Grundleitungsrohres hat in Ergänzung zu vorstehendem noch den Vorteil, dass diese einfach in der Herstellung und leicht zu montieren ist.
Des Weiteren können Fäkalienablagerungen im Bereich der Wärmetauscher, sofern sie überhaupt über das normale Maß hinaus auftreten, mit einfachen Mitteln, beispielsweise durch Druckspülung, beseitigt werden.

Die Erfindung wird nachstehend anhand eines in den Zeichnungen schematisch dargestellten Ausführungsbeispiels näher erläutert.
Es zeigen.
- Figur 1: einen Längsschnitt durch eine erfindungsgemäß ausgebildete Vorrichtung in Form eines abwasserführenden Grundleitungsrohres mit angeschlossener Wärmepumpe (Schnitt I-I nach Fig. 2),
- Figur 2: den Schnitt II-II nach Fig. 1,
- Figur 3: den Anschlußbereich zwischen zwei erfindungsgemäß ausgebildeten Vorrichtungen in einer Schnittdarstellung,
- Figur 4: eine weitere mögliche Variante des Anschlußbereiches.

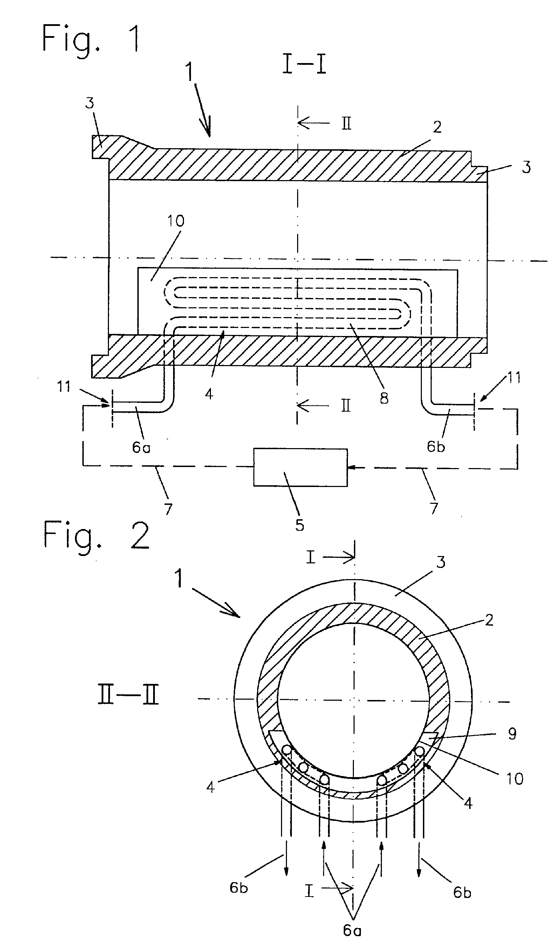

Die Fig. 1 und 2 zeigen ein abwasserführendes Grundleitungsrohr 1 in zwei Schnittdarstellungen, bestehend aus einer rohrförmigen Wandung 2 mit an sich bekannten stirnseitig angeordneten flanschähnlichen Verbindungselementen 3, die ihrerseits die koaxiale Anordnung und Verbindung mehrerer Grundleitungsrohre 1 gewähleisten.
Grundleitungsrohre 1 sind an sich aus Beton, Steinzeug oder Kunststoff gefertigt. Denkbar sind jedoch auch Werkstoffe, wie Glas und Metall, aber auch neuartige Verbundwerkstoffe.

Erfindungsgemäß sind dem Grundleitungsrohr 1 ein oder mehrere, vorliegend zwei Wärmetauscher 4 zugeordnet.

Jeder Wärmetauscher 4 ist in ein mit einem flüssigen oder gasförmigen Wärmeübertragungsmedium gefüllten Kreislaufsystem einer an sich bekannten und nicht näher beschriebenen Wärmepumpe 5 mittels eines sogenannten Vor- und Rücklaufs 6a; 6b eingebunden und mit derselben zweckmäßigerweise über Rohrleitungen 7 verbunden, wobei empfohlen wird, bei Nutzung eines flüssigen Wärmeübertragungsmediums zur Gewährleistung einer Frostsicherheit Glykol oder eine Mischung desselben mit Wasser zu verwenden.
Auch andere geeignete Frostschutzmittel, wie z.B. Alkohol, sind denkbar.

Vorliegend sind die Wärmetauscher 4 als langgestreckte und mehrfach gekrümmte Gebilde in Form von Rohren 8 ausgeführt.
Selbstverständlich ist ein kreisrunder Querschnitt derselben nicht zwingend, sondern es kann auch ein rohrähnlicher, beispielsweise abgeflachter Querschnitt als besonders geeignet angesehen werden und wird durch die Erfindung mit erfaßt.

Geeignet erscheinen ferner plattenförmige Gebilde in Form gekrümmter und an die Kontur des Grundleitungsrohres 1 angepaßter Hohlkörper, die ebenfalls über einen Vor- und einen Rücklauf 6a; 6b verfügen (nicht näher dargestellt).

Für den Fachmann ist leicht nachvollziehbar, dass sich für Wärmetauscher 4 wärmeleitende Werkstoffe, wie Kupfer, Aluminium, Stahlblech, gegebenenfalls aus rostfreiem Stahl, Glas oder Kunststoffe besonders anbieten.

Die Wärmetauscher 4 sind des Weiteren fest, gegebenenfalls lösbar mittels an sich bekannter mechanischer Verbindungsmittel, wie beispielsweise Schrauben, an der Innen- oder Außenkontur des Grundleitungsrohres 1, in der bevorzugten Ausführungsform vorzugsweise im und/oder unterhalb des Flüssigkeitsspiegels des Abwassers angeordnet.
Es versteht sich von selbst, dass bei dickwandigen Grundleitungsrohren 1, die Anordnung der Wärmetauscher 4 an der Innenkontur der Außenkontur vorzuziehen ist, um den gewünschten Effekt des Wärmeaustausches vom Abwasser in das Wärmeübertragungsmedium der Wärmetauscher 4 vorteilhaft zu unterstützen.

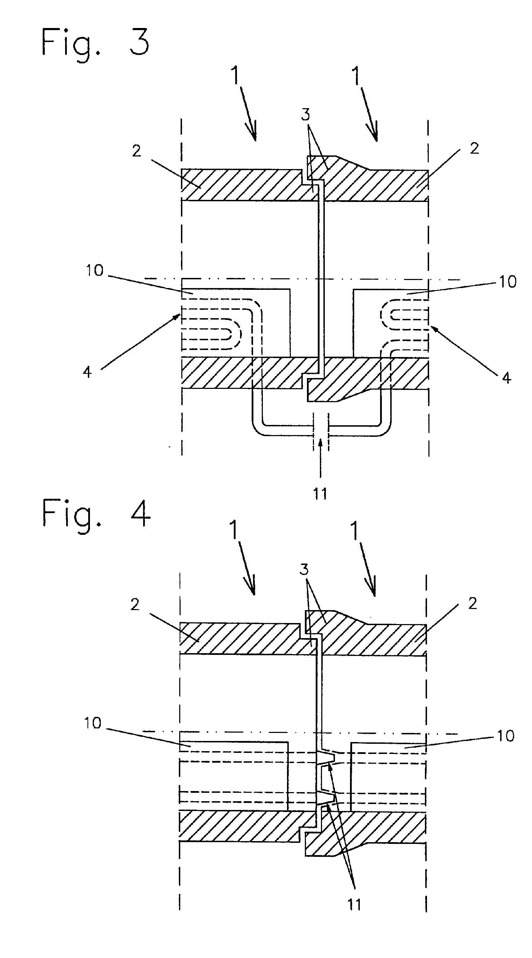

Wie aus Fig. 4 ersichtlich, können die Wärmetauscher 4 auch in die Wandung 2 des Grundleitungsrohres 1, respektive in eingearbeitete Ausnehmungen 9 derselben eingelassen und gegebenenfalls durch eine plattenförmige Dichtung 10 zum Abwasser hin abgedichtet oder auch vollständig in die Wandung 2 des Grundleitungsrohres 1 integriert, beispielsweise bei Beton- oder Kunststoffrohren in dieselben eingegossen sein (nicht näher dargestellt).
Aus vorstehendem ist ferner deutlich geworden, dass die Wärmetauscher 4 sowohl in direktem als auch in indirektem Kontakt zum Abwasser stehen können.

Die Handhabung der erfindungsgemäßen Vorrichtung bzw. deren Funktionsweise ist" wie folgt:

Wie bereits oben dargetan, sind die Wärmetauscher 4 der Grundleitungsrohre 1 über einen Vor- und Rücklauf 6a; 6b in das Kreislaufsystem der Wärmepumpe 5 einzubinden.
Dies kann während der Montage bzw. während des Verlegens der Grundleitungsrohre 1 derart erfolgen, dass Vor- und Rücklauf 6a; 6b so gestaltet sind, dass sie durch die Wandung 2 des Grundleitungsrohres 1 hindurchgeführt sind und mittels Verbindungsmittel 11, welches an sich bekannte Steck- oder Schraubverbindungen sein können (nicht näher dargestellt) mit dem Kreislaufsystem einer Wärmepumpe 5 verbunden werden.

In der bevorzugten Ausführungsform ist es jedoch angezeigt, Vor- und Rücklauf 6a; 6b einer Mehrzahl von Wärmetauschern 4 eines Grundleitungsrohres 1 oder mehrerer koaxial angeordneter Grundleitungsrohre 1 untereinander in Reihe und mit dem Kreislaufsystem der Wärmepumpe 5 zu verbinden.
Die Verbindung kann wie vorstehend mittels Schraub- oder Steckverbindungen außerhalb der Wandung 2 (Fig. 3), aber auch mittels Klebverbindungen, welches sich besonders für Kunststoffrohre anbietet, durchgeführt werden.
Weitere geeignete Verbindungsmöglichkeiten, wie z. B. Löten, werden durch die Erfindung ebenfalls erfaßt.

Gleichfalls ist es denkbar, die Verbindungsmittel 11 so auszubilden und so anzuordnen, dass ein gesonderter Arbeitsschritt für die Erstellung des Kreislaufsystems der Wärmepumpe 5 während der Montage der Grundleitungsrohre 1 untereinander entfallen kann.

Im Wesentlichen sind dabei die Verbindungsmittel 11 für den Vor- und Rücklauf 6a; 6b als Steckverbindungen ausgeführt und in den Stirnflächenbereich der zu verbindenden Grundleitungsrohre 1 fest eingelassen (Fig. 4).
Eine Dichtwirkung bezüglich des Kreislaufsystems der Wärmepumpe 5 wird beispielsweise durch eine konische Ausführung der Steckverbindung oder an sich bekannte Dichtringe erzielbar.

## Patentansprüche

1. Vorrichtung zum Entsorgen von Abwasser aus privaten Haushalten, öffentlichen Einrichtungen und Gewerbebetrieben in Form eines Grundleitungsrohres, insbesondere abwasserführenden Grundleitungsrohres, bestehend aus Werkstoffen, wie Beton, Steinzeug, Kunststoff, Glas, Metall oder Verbundwerkstoffen,
**dadurch gekennzeichnet, dass**
dem Grundleitungsrohr (1) ein oder mehrere Wärmetauscher (4) zugeordnet sind.

2. Vorrichtung nach Anspruch 1,
**dadurch gekennzeichnet, dass**
die Wärmetauscher (4) in ein mit einem Wärmeübertragungsmedium gefülltes Kreislaufsystem einer an sich bekannten Wärmepumpe (5) eingebunden sind.

3. Vorrichtung nach einem der Ansprüche 1 und 2,
**dadurch gekennzeichnet, dass**
die Wärmetauscher (4) langgestreckt oder plattenförmig ausgebildet sind.

4. Vorrichtung nach einem der Ansprüche 1 bis 3,
**dadurch gekennzeichnet, dass**
die Wärmetauscher (4) in Form von langgestreckten Gebilden ein oder mehrfach gekrümmt sind.

5. Vorrichtung nach Anspruch 4,
**dadurch gekennzeichnet, dass**
die langgestreckten Gebilde Rohre (8) oder rohrähnlich ausgebildet sind.

6. Vorrichtung nach einem der Ansprüche 1 bis 3,
**dadurch gekennzeichnet, dass**
die plattenförmigen Gebilde, gekrümmte und an die Kontur des Grundleitungsrohres (1) angepaßte Hohlkörper sind.

7. Vorrichtung nach einem der Ansprüche 1 bis 6,
**dadurch gekennzeichnet, dass**
das Wärmeübertragungsmedium einen flüssigen oder gasförmigen Aggregatzustand aufweist.

8. Vorrichtung nach einem der Ansprüche 1 bis 7,
**dadurch gekennzeichnet, dass**
das flüssige Wärmeübertragungsmedium zur Gewährleistung einer Frostsicherheit aus Glykol oder Alkohol oder einer Mischung derselben mit Wasser besteht.

9. Vorrichtung nach einem der Ansprüche 1 bis 8,
**dadurch gekennzeichnet, dass**
die Wärmetauscher (4) aus einem wärmeleitenden Werkstoff bestehen.

10. Vorrichtung nach einem der Ansprüche 1 bis 9,
**dadurch gekennzeichnet, dass**
die Wärmetauscher (4) aus Kupfer, Aluminium, Stahlblech, gegebenenfalls rostfreien Stahlblech, Glas oder einem Kunststoff bestehen.

11. Vorrichtung nach einem der Ansprüche 1 bis 10,
**dadurch gekennzeichnet, dass**
die Wärmetauscher (4) auf der Innen- und/oder der Außenkontur des Grundleitungsrohres (1) fest, gegebenenfalls lösbar, angeordnet sind.

12. Vorrichtung nach einem der Ansprüche 1 bis 11,
**dadurch gekennzeichnet, dass**
die Wärmetauscher (4) in die Wandung (2) des Grundleitungsrohres (1) eingelassen sind.

13. Vorrichtung nach einem der Ansprüche 1 bis 12,
**dadurch gekennzeichnet, dass**
die Wärmetauscher (4) in die Wandung (2) des Grundleitungsrohres (1) integriert, vorzugsweise eingegossen sind.

14. Vorrichtung nach einem der Ansprüche 1 bis 13,
**dadurch gekennzeichnet, dass**
die Wärmetauscher (4) in einem direkten oder indirekten Kontakt mit dem Abwasser stehen.

15. Vorrichtung nach einem der Ansprüche 1 bis 14,
**dadurch gekennzeichnet, dass**
die Wärmetauscher (4) jeweils wenigstens einen Vor- (6a) und einen Rücklauf (6b) für das Wärmeübertragungsmedium aufweisen.

16. Vorrichtung nach Anspruch 15,
**dadurch gekennzeichnet, dass**
jeder Wärmetauscher (4) getrennt von gegebenenfalls weiteren Wärmetauschern (4) über Vor- und Rücklauf (6a; 6b) mit der Wärmepumpe (5) verbunden ist.

17. Vorrichtung nach Anspruch 15,
**dadurch gekennzeichnet, dass**
Vor- und Rücklauf (6a; 6b) von wenigstens zwei Wärmetauschern (4) eines Grundleitungsrohres (1) zur Ausbildung eines gemeinsamen Kreislaufsystems mit der Wärmepumpe (5) verbunden sind.

18. Vorrichtung nach Anspruch 15,
**dadurch gekennzeichnet, dass**
Vor- und Rücklauf (6a; 6b) der Wärmetauscher (4) von wenigstens zwei zusammenfügbaren Grundleitungsrohren (1) zur Ausbildung eines gemeinsamen Kreislaufsystems mit der Wärmepumpe (5) außerhalb der Wandung (2) der Grundleitungsrohre (1) zusammensteck- oder -schraubbar ausgeführt sind.

19. Vorrichtung nach Anspruch 15,
**dadurch gekennzeichnet, dass**
Vor- und Rücklauf (6a; 6b) der Wärmetauscher (4) von wenigstens zwei zusammenfügbaren Grundleitungsrohren (1) zur Ausbildung eines gemeinsamen Kreislaufsystems mit der Wärmepumpe (5) in die Wandung (2) der Grundleitungsrohre (1), vorzugsweise in den Stirnflächenbereich derselben, eingelassen und zusammensteckbar ausgeführt sind.

20. Vorrichtung nach einem der Ansprüche 1 bis 19,
**dadurch gekennzeichnet, dass**
die Wärmetauscher (4) vorzugsweise im und/oder unterhalb des Flüssigkeitsspiegels des Abwassers im Grundleitungsrohr (1) an der Innenund/oder der Außenkontur und/oder in der Wandung (2) desselben angeordnet sind.
